(19) **Europäisches Patentamt / European Patent Office / Office européen des brevets**

(11) **EP 4 356 793 B1**

(12) **EUROPEAN PATENT SPECIFICATION**

(45) Date of publication and mention
of the grant of the patent:
**27.08.2025  Bulletin 2025/35**

(21) Application number: **23201483.7**

(22) Date of filing: **03.10.2023**

(51) International Patent Classification (IPC):
***A47J 27/04*** *(2006.01)*    ***F22B 35/18*** *(2006.01)*
***F22B 1/28*** *(2006.01)*

(52) Cooperative Patent Classification (CPC):
**F22B 1/285; A47J 27/04; F22B 35/18**

(54) **LIQUID LEVEL ESTIMATION IN A STEAM GENERATION SYSTEM**

FLÜSSIGKEITSNIVEAUSCHÄTZUNG IN EINEM DAMPFERZEUGUNGSSYSTEM

ESTIMATION DE NIVEAU DE LIQUIDE DANS UN SYSTÈME DE GÉNÉRATION DE VAPEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **03.10.2022   US 202217937621**

(43) Date of publication of application:
**24.04.2024   Bulletin 2024/17**

(73) Proprietor: **Beko Europe Management S.r.l.**
**20156 Milano (IT)**

(72) Inventors:
• **Gigante, Alessandro**
 **BENTON HARBOR, 49022 (US)**

• **MINETTO, Luca**
 **BENTON HARBOR, 49022 (US)**
• **ROSSIGNOLO, Giampiero**
 **BENTON HARBOR, 49022 (US)**

(74) Representative: **Buzzi, Notaro & Antonielli d'Oulx
S.p.A.
Corso Vittorio Emanuele II, 6
10123 Torino (IT)**

(56) References cited:
**EP-A1- 3 872 404    EP-B1- 1 019 655
EP-B1- 1 887 123**

**Description**

**FIELD OF THE DISCLOSURE**

The present disclosure generally relates to a steam generation system, and, more specifically, to liquid estimation in a steam generation system.

**BACKGROUND**

Cooking appliances, particularly stoves, ovens, microwaves, steamers, and the like, are provided with steam generator assemblies. Cooking with steam, or at least partially with steam, is generally regarded as a healthier and, oftentimes, faster alternative than many other cooking means. As a result, various steam generator assemblies have become a popular addition to cooking appliances. These steam generator assemblies typically include a water circuit that includes a water reservoir, a steam generator, and a steam outlet. In operation, water from the water reservoir is routed into the steam generator whereat it at least partially turns to steam. The steam is then released through the steam outlet and into a cooking cavity to heat and cook foodstuff within the cooking cavity.

After a cooking cycle, water remaining in the steam generator is pumped back into the water reservoir with a drain pump. The drain pump traditionally generates noise, particularly, when the water level in the steam generation assembly is not accurately estimated. More specifically, when the water is not estimated, the drain pump will continue to operate (e.g., a dry cycle) after the steam generator is empty. These dry cycles are loud and can negatively impact the drain pump over time. Traditional water regulation assemblies utilize methods with set variables that do not account for cycle variations. Cycle variations may become more relevant over operational life as components age and mineral deposits (e.g., limescale) are formed. In addition to changes over operational life, various other conditions can result in cycle variations. These other conditions include voltage variations, environmental temperatures, and part variations. As such, these traditional methods with set variables do not accurately allow water estimation.

Accordingly, the present disclosure provides liquid estimation in a steam generation system that accounts for conditions that impact cycle variations.

Document EP1019655B1 discloses for example a process for restoring the level of water in boilers of steam generating machines according to the available prior art.

**SUMMARY OF THE** INVENTION

The invention relates to a method of controlling a steam generation system according to claim 1 and a steam generation system according to claim 15.

According to one aspect of the present disclosure, a method of estimating fluid in a steam generation system includes determining a first steam flow rate of a steam generator. During a present steam cycle, determine a quantity of liquid remaining in the one or more liquid reservoirs by determining a time the steam generator injected steam and multiplying the time by the first steam flow rate. Based on the first steam flow rate, determine a time remaining before the quantity of liquid remaining in the one or more liquid reservoirs is below a threshold and the one or more liquid reservoirs needs to be refilled.

According to another aspect of the present disclosure, a method of estimating fluid in a steam generation system includes determining a first steam flow rate of a steam generator for a present steam cycle. After the present steam cycle, fill the steam generator with a quantity of liquid past a minimum level obtained by a first sensor to a maximum level obtained by a second sensor. Run the steam generator until the quantity of liquid in the steam generator returns to the minimum level. Divide a volume between the minimum level and the maximum level by the time the steam generator was running to determine a second steam flow rate.

According to another aspect, a method of estimating fluid in a steam generation system includes, before a first steam cycle, determining a first drainage flow rate of a drainage pump by measuring a time to reduce a liquid level in a steam generator from a maximum level to a minimum level with input only from the drainage pump. After the first steam cycle, actuate the drainage pump until the liquid level in the steam generator is equal to the minimum level.

These and other features, advantages, and objects of the present disclosure will be further understood and appreciated by those skilled in the art by reference to the following specification, claims, and appended drawings.

**BRIEF DESCRIPTION OF THE DRAWINGS**

In the drawings:

FIG. 1 is a schematic view of a steam generation system for a cooking appliance according to an aspect of the present disclosure;

FIG. 2A is a schematic view of a fluid level sensor measuring liquid at a minimum level in a steam generator of the steam generation system according to an aspect of the present disclosure;

FIG. 2B is a schematic view of a fluid level sensor measuring liquid at a maximum level in the steam generator according to an aspect of the present disclosure;

FIG. 3 is a schematic view of a control system of the steam generation system according to an aspect of the present disclosure;

FIG. 4 is a first method flow chart of a liquid estimation method according to an aspect of the present disclosure; and

FIG. 5 is a first method flow chart of a system management method according to an aspect of the present disclosure.

The components in the figures are not necessarily to scale, emphasis instead being placed upon illustrating the principles described herein.

## DETAILED DESCRIPTION

The present illustrated embodiments reside primarily in combinations of method steps and apparatus components related to liquid (i.e., fluid) estimation in a steam generation system. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

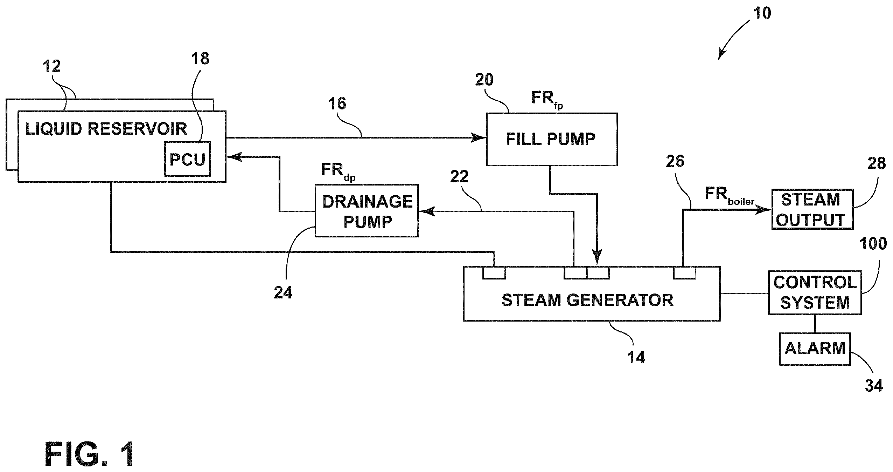

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

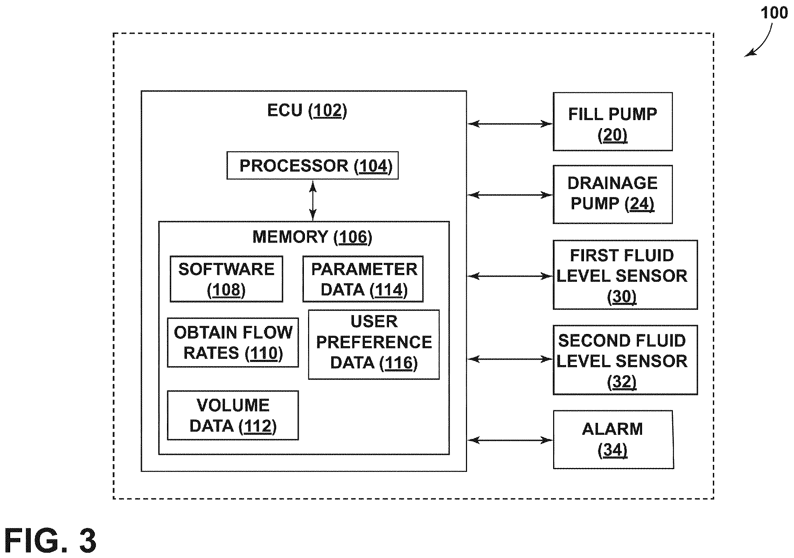

Referring initially to FIG. 1, reference numeral 10 generally designates a steam generation system for a cooking appliance. The steam generation system 10 includes at least one liquid reservoir 12 (e.g., a single, a pair, three or more liquid reservoirs 12), which may include a liquid-containing body (e.g., water), a manual fill port, a connection to a plumbing system of a building for automatic filling, or a combination thereof. The liquid reservoir 12 fluidically connects to a steam generator 14 via a first fluid line 16. The steam generator 14 heats liquid from the liquid reservoir 12 at least partially converting the liquid into a steam. The liquid reservoir 12 may include a pressure control unit 18 ("PCU"), which may be configured to both generate and reduce a pressure within the liquid reservoir 12. For example, the pressure control unit 18 may include a pressure generator, a pressure release valve, and/or a pressure meter to maintain a pressure within the liquid reservoir 12 (e.g., an equilibrium with a pressure inside the steam generator 14 and/or an atmospheric pressure). The liquid reservoir 12 may include a liquid level sensor (not shown) for determining a level of liquid in the liquid reservoir 12. A fill pump 20 may be located along the first fluid line 16 and controls liquid exiting the liquid reservoir 12 and entering the steam generator 14. The liquid reservoir 12 also fluidically connects to the steam generator 14 via a second fluid line 22. A drainage pump 24 may be located along the second fluid line 22 and controls liquid exiting the steam generator 14 and entering the liquid reservoir 12. A third flow line 26 extends from the steam generator 14 to a steam output 28 into a heating cavity, where food is cooked. It should be appreciated that, in some embodiments, the fill pump 20 and the drainage pump 24 may be connected to a single fluid line. It should also be appreciated that, in some embodiments, the fill pump 20 and the drainage pump 24 may be the same component (e.g., a reversible pump). In some embodiments, the steam generation system 10 may include a control system 100 (FIG. 3) for performing the methods as described herein.

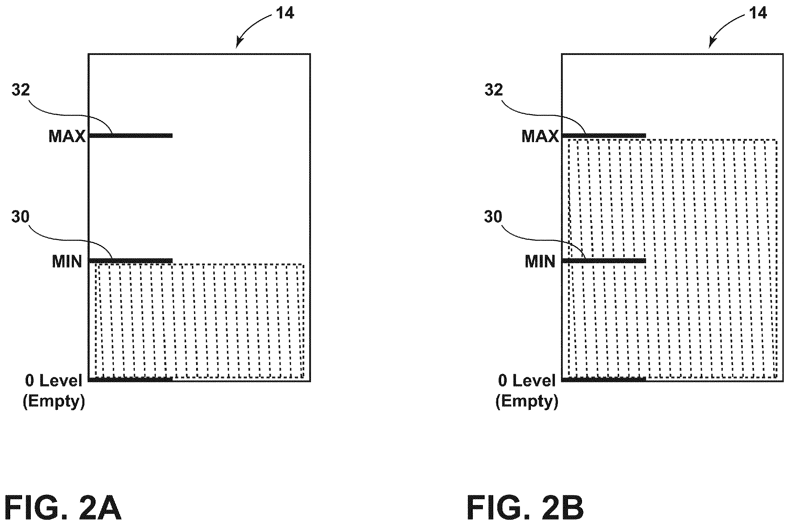

With reference now to FIGS. 2A and 2B, the steam generator 14 may include one or more sensors (e.g., two or more sensors, three or more sensors). In some embodiments, the one or more sensors includes a first fluid level sensor 30 associated with a minimum ("MIN") operational level and a second fluid level sensor 32 associated with a maximum ("MAX") operational level. The level sensors 30, 32 are visible or otherwise generate (e.g., via the control system 100) a notification to a user of the fluid level. Accordingly, the user may obtain knowledge from the level sensors 30, 32 that the steam generator 14 is either at MIN or MAX. During a cooking cycle, liquid is introduced to the steam generator 14 and maintained between the MAX and MIN levels where it is heated, partially becoming steam that exits the steam output 28. When the cooking cycle is complete, the drainage pump 24 substantially empties ("0 level") the steam generator 14 and liquid from related components of the steam generation system 10 (e.g., the first fluid line 16 and the second fluid line 22), and reintroduces substantially all the liquid from the steam generation system 10 back into the liquid reservoir 12. In other words, at empty or 0 level, while certain components of the steam generation system may be slightly coated in liquid, substantially all the liquid has been removed by operation of the drainage pump 24. The fill pump 20 provides a fill flow rate $FR_{fp}$, the drainage pump 24 provides a drainage flow rate $FR_{dp}$, and the steam generator 14 provides a steam flow rate $FR_{boiler}$.

FIG. 3 schematically illustrates the control system 100. The control system 100 may include an electronic control unit (ECU) 102. The ECU 102 may include a processor 104 and a memory 106. The processor 104 may include any suitable processor 104. Additionally, or alternatively, the ECU 102 may include any suitable number of processors, in addition to or other than the processor 104. The memory 106 may comprise a single disk or a plurality of disks (e.g., hard drives) and includes a storage management module that manages one or more partitions within the memory 106. In some embodiments, memory 106 may include flash memory, semiconductor (solid-state) memory, or the like. The memory 106 may include Random Access Memory (RAM), a Read-Only Memory (ROM), Electrically Erasable Programmable Read-Only Memory (EEPROM), or a combination thereof. The memory 106 may include instructions that, when executed by the processor 104, cause the processor 104 to, at least, perform the functions associated with the components of the control system 100. The fill pump 20, the drainage pump 24, and an alarm 34 (e.g., a user interface on a cooking appliance, a light on a cooking appliance, a connected mobile computing device, and/or the like) may, therefore, be controlled and/or receive instructions from the ECU 102. The memory 106 may, therefore, include software 108, obtained flow rates 110 (i.e., the fill flow rate $FR_{fp}$, the drainage flow rate $FR_{dp}$, and the steam flow rate $FR_{boiler}$), volume data 112 (i.e., a volume capability of the liquid reservoir 12, an aggregate of more than one liquid reservoir 12, a volume between MAX and MIN levels of the steam generator 14), parameter data 114 (i.e., a set number of steam cycles before completing any of the below method steps, supply voltage, supply frequency), and user preference data 116 (e.g., a selected steam cycle setting). The control system 100 may be configured to perform the method steps as described herein.

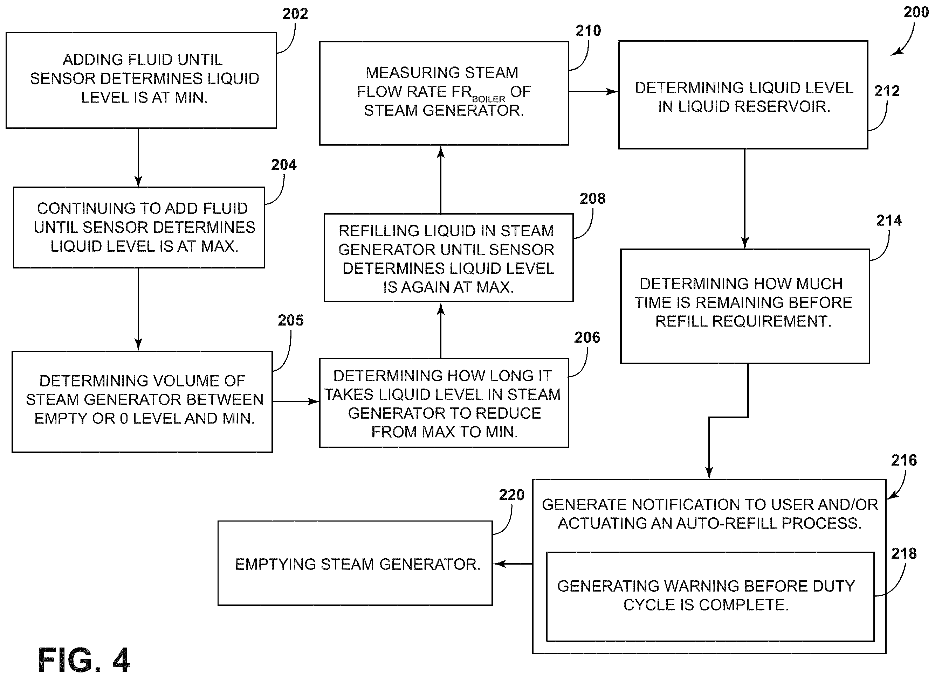

With reference now to FIG. 4, the steam generation system 10 includes a liquid estimation method 200. The liquid estimation method 200 improves upon the traditional methods by calculating the liquid level at or between each steam cycle or a predetermined number of steam cycles (e.g., after zero steam cycles, after each steam cycle, every five steam cycles, every ten steam cycles, and/or the like) to determine a liquid usage rate and estimate when the liquid reservoir 12 (or more than one liquid reservoir 12) will need to be filled. The liquid estimation method 200 also can be utilized to determine an amount of liquid within the steam generator 14 and the drainage flow rate $FR_{dp}$ to minimize dry cycle duration of the drainage pump 24 once the steam generation system 10 has completed the steam cycle. The liquid estimation method 200 includes several steps that occur at the beginning of a steam cycle and additional steps that occur during the steam cycle. Each of these steps may occur (e.g., via parameter data 114), after an equal predetermined number of steam cycles, or after different predetermined numbers of steam cycles, which are generically referred to as a first, second, third, or fourth predetermined number of steam cycles. These different steam cycles may also be generally referred to as a present steam cycle, a subsequent steam cycle that occurs after the present steam cycle, and an additional steam cycle (i.e., an additionally requested steam cycle) that occurs after the subsequent steam cycle. In other words, some steps may occur during each steam cycle and other steps may occur after more than one steam cycle (e.g., two, three, or more steam cycles). In some embodiments, the liquid estimation method 200 may be facilitated by the control system 100.

The liquid estimation method 200 may be reoccurring such that a first drainage flow rate $FR_{dp}$ can be obtained for a present steam cycle and, after a second predetermined number of cycles, a second flow drainage flow rate $FR_{dp}$ can be obtained for a subsequent steam cycle that is different than the first drainage flow rate $FR_{dp}$. Similarly, a first fill flow rate $FR_{fp}$ can be obtained for a present steam cycle and, after a second predetermined number of cycles, a second flow fill flow rate $FR_{fp}$ can be obtained for a subsequent steam cycle that is different than the first fill flow rate $FR_{fp}$. Likewise, a first steam flow rate $FR_{boiler}$ can be obtained for a present steam cycle and, after a second predetermined number of cycles, a second steam flow rate $FR_{boiler}$ can be obtained for a subsequent steam cycle that is different than the first steam flow rate $FR_{boiler}$. These differences in flow rates may be the result of environmental conditions and/or aging components of the steam generation system 10. It should also be appreciated that a length of time (e.g., a week, a month, a year) may be used alternatively or in conjunction with the predetermined number of steam cycles.

With reference specifically to FIG. 4, steps 202 - 208 generally occur at the beginning of a steam cycle. At step 202, the liquid estimation method 200 includes, before each or a predetermined number of steam cycles, adding fluid to the steam generator 14 with the fill pump 20 until the first liquid level sensor 30 determines that the liquid is at MIN. For example, the processor 104 may be configured to actuate the fill pump 20 until the liquid level reaches MIN and timing the operation. At step 204, the liquid estimation method 200 includes continuing to add fluid with the fill pump 20 until the second liquid level sensor 32 determines that the liquid level is at MAX. For example, the processor 104 may be configured to further actuate the fill pump 20 until the liquid level reaches MAX while timing the operation. During steps 202 and 204, only the fill pump 20 is actuated to move liquid from the at least one liquid reservoir 12 to the steam generator 14. For example, step 204 may be completed (e.g., by the processor 104) in accordance with Eq. (1) below:

$$FR_{fp} = (Volume_{max} - Volume_{min}) / (t_{max} - t_{min}) \text{ [ml/sec]} \qquad (1)$$

wherein, $t_{min}$ is equal to zero and $t_{max}$ is equal to the time in seconds to obtain the fluid level MAX, starting from fluid level MIN, with input only from the fill pump 20 and the volume of liquid between $Volume_{max}$ and $Volume_{min}$ is known (e.g., in ml). Thus, the fill flow rate $FR_{fp}$, at any time of the operational life of the cooking appliance, can be determined. At step 205, the liquid estimation method 200 may include determining a liquid quantity in the steam generation system 10 between empty or 0 level and MIN in the steam generator 14 based on the time (which may be obtained from step 202) it takes the first fluid level sensor 30 to read MIN from empty and multiplying that time by the fill flow rate $FR_{fp}$ (which may be obtained from step 204) to estimate a volume between MIN and 0 level (e.g., liquid remaining in the first fluid line 16, the second fluid line 22, the steam generator 14, and other components of the steam generation system 10). For example, the processor 104 may be configured to actuate the fill pump 20 until the liquid level reaches MIN from 0 level while timing the operation.

At step 206, the liquid estimation method 200 includes measuring the drainage flow rate $FR_{dp}$ of the drainage pump 24. As explained in the background section, the drainage flow rate $FR_{dp}$ may change over time based on any number of environmental or operational factors. By periodically measuring the drainage flow rate $FR_{dp}$, dry cycle duration of the pump can be minimized. Step 206 includes actuating the drainage pump 24 and determining how long it takes the liquid level in the steam generator 14 to reduce from MAX to MIN (e.g., via the first liquid level sensor 30). For example, the processor 104 may be configured to actuate the drainage pump 24 until the liquid level reaches MIN while timing the operation. During step 206, only the drainage pump 24 is actuated to move liquid from the steam generator 14 to the at least one liquid reservoir 12. For example, step 206 may be completed in accordance with Eq. (2) below:

$$FR_{dp} = (Volume_{max} - Volume_{min}) / (t_{max} - t_{min}) \text{ [ml/sec]} \qquad (2)$$

where $t_{min}$ is equal to zero and $t_{max}$ is equal to the time in seconds to obtain the fluid level MIN from fluid level MAX with input only from the drainage pump 24 and the volume of liquid between $Volume_{max}$ and $Volume_{min}$ is known (e.g., in ml). Thus, the drainage flow rate $FR_{dp}$ at any time of the operational life of the cooking appliance can be determined. As such, because 0 level is not a measurable quantity, the differences between 0 level and MIN or MAX can be estimated to limit dry cycle duration in conjunction with the drainage flow rate $FR_{dp}$ at any time of the operational life. At step 208, the liquid estimation method 200 includes refilling the liquid in the steam generator 14 until the second liquid level sensor 32 determines the liquid level is again at MAX. For example, the processor 104 may be configured to actuate the fill pump 20 until the liquid level reaches MAX.

With continued reference to FIG. 4, steps 210 - 214 generally occur during the steam cycle. At step 210, the liquid estimation method 200 includes, during a steam cycle, measuring the steam flow rate $FR_{boiler}$ of the steam generator 14 by measuring how long it takes the liquid level in the steam generator 14 to reduce from MAX to MIN (e.g., with the first and second fluid level sensors 30, 32) without input from the fill pump 20 or the drainage pump 24. For example, the processor 104 may be configured to actuate the steam generator 14 until the liquid level reaches MIN and timing the operation. The steam flow rate $FR_{boiler}$ of the steam generator 14 is the rate at which liquid is heated into steam and dissipated into the heating cavity. For example, step 210 may be completed in accordance with Eq. (3) below:

$$FR_{boiler} = (Volume_{max} - Volume_{min}) / (t_{boiler}) \text{ [ml/sec]} \qquad (3)$$

where $t_{boiler}$ is equal to the time in seconds the steam generator 14 is actuated to obtain the fluid level MIN with input only from the steam generator 14 and the volume of liquid between $Volume_{max}$ and $Volume_{min}$ is known (e.g., in ml). Thus, the steam flow rate $FR_{boiler}$ at any time of the operational life of the cooking appliance can be determined.

Based on steps 202 - 210, the liquid estimation method 200 includes, at step 212, determining a liquid level in the one or more liquid reservoirs 12. Step 212 includes referencing a known starting amount in the one or more liquid reservoirs 12 before the steam cycle, for example, when the one or more liquid reservoirs 12 are full (the $Water_{reservoir}$ (t0)) and subtracting the steam flow rate $FR_{boiler}$ multiplied by the time (in seconds) that the steam generator 14 was running. The processor 104 may be configured to subtract the steam flow rate $FR_{boiler}$ multiplied by the time (in seconds) that the steam generator 14 was running from a known liquid quantity in the one or more liquid reservoirs 12. For example, step 212 may be completed in accordance with Eq. (4) below:

$$Water_{reservoir} (t_{END}) = Water_{reservoir}(t0) - (Water_{boiler}t\_current + t_{ON} * FR_{boiler}) \text{ [ml] } (4)$$

where $Water_{reservoir}$ at ($t_{END}$) is equal to the liquid quantity in the one or more liquid reservoirs 12. $Water_{reservoir}$ at ($t_{END}$) will change based on known quantities obtained from the previous steps, for example, after the steam generator 14 is on and the steam flow rate $FR_{boiler}$ continues for a number of seconds (ton). $Water_{boiler}t\_current$ is an estimated quantity of liquid in the steam generator 14, which may be determined based on a total quantity of liquid reduction based on the steam flow rate $FR_{boiler}$ from MAX, a liquid increase based on the fill flow rate $FR_{fp}$ from MIN, or by being at either MIN or MAX via the level sensors 30, 32. Step 212, may, alternatively, include measuring an ending quantity of liquid in the one or more liquid reservoirs 12, once all the liquid in the steam generation system 10 is returned to the one or more liquid reservoirs 12. The alternative estimation would follow Eq. (4) above, but would not include $Water_{boiler}t\_current$ as part of the calculation.

Based on steps 202 - 212, the time at which the one or more liquid reservoirs 12 needs to be refilled can be determined at step 214. At step 214, the liquid estimation method 200 includes determining (e.g., the processor 104 may be configured to determine) how much time is remaining before refill requirements by dividing the amount of liquid in the one or more liquid reservoirs 12 (e.g., based on step 212) by the steam flow rate $FR_{boiler}$ (step 210), if the steam flow rate $FR_{boiler}$ for a selected steam cycle is constant, multiplied by how much longer the steam cycle has to run within a steam cycle. In other embodiments, the steam flow rate $FR_{boiler}$ for a selected steam cycle may not be constant (e.g., one or more rates) and the steam flow rate $FR_{boiler}$ can be averaged or otherwise determined based on the time (t) that each steam flow rate $FR_{boiler}$ is occurring in the selected steam cycle. Regardless, the resulting number may then be multiplied by 1/60 to provide a time in minutes before the one or more liquid reservoirs 12 needs to be refilled. For example, step 214 may be completed in accordance with Eq. (5) below:

$$T_{remaining} = (Water_{system}t\_current / (FR_{boiler} * duty_{boiler}\%)) * 1/60 \, [min] \quad (5)$$

where the time in minutes before the one or more liquid reservoirs 12 needs to be refilled ($T_{remaining}$) is determined by multiplying the steam flow rate $FR_{boiler}$ (step 210) by the remaining steam cycle requirement ($duty_{boiler}\%$). This resulting number may then be multiplied by 1/60 to provide $T_{remaining}$. The $Water_{system}t\_current$ is equal to the liquid level currently in the one or more liquid reservoirs 12 and the $Water_{boiler}t\_current$ is equal to liquid level currently in the steam generator, both obtained in step 212 and/or Eq. 4.

With continued reference to FIG. 4, steps 216 and 218 generally occur during the steam cycle and step 220 generally occurs after the steam cycle. At step 216, if the one or more liquid reservoirs 12 need to be refilled, then the alarm 34 may generate a notification (e.g., the processor 104 may be configured to generate the notification) to the user, a service/maintenance provider, and/or actuating an auto-refill process (e.g., by the processor 104) where the auto-refill process is stopped upon completion (e.g., when the one or more liquid reservoirs 12 are full). Based on how much longer the steam cycle has to run and the $T_{remaining}$, step 216 may further include, at step 218, generating a warning (e.g., requesting manual refill or request approval to begin auto-refilling) or automatically (e.g., without user approval) starting the auto-refill process before the duty cycle is complete. For example, the processor 104 may be configured to generate the warning or automatically refill the steam generation system 10.

At step 220, the liquid estimation method 200 may include (e.g., the processor may be configured to), after a steam cycle, emptying the steam generator 14. Step 220 includes actuating the drainage pump 24 and, after a MIN fluid level is reached, multiplying the drainage flow rate $FR_{dp}$ by a time until the volume between MIN and empty (e.g., as obtained in step 205) is reached.

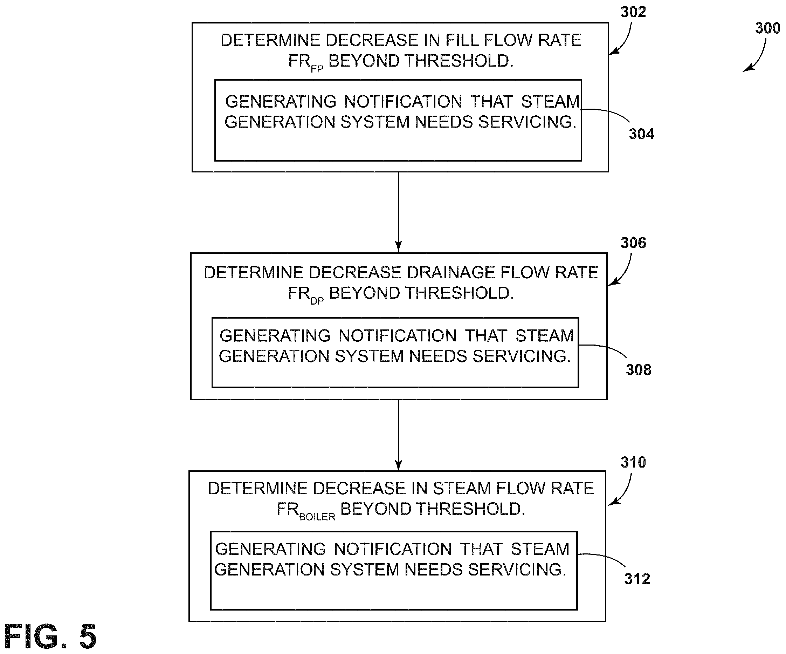

With reference now to FIG. 5, the present disclosure may utilize data obtained from liquid estimation method 200 to make certain recommendations in a system management method 300. For example, the system management method 300 may include (e.g., the processor may be configured to), at step 302, determining a difference (e.g., lower or higher) in fill flow rate $FR_{fp}$ beyond a threshold (e.g., in association with sequentially repeating steps 202-204 to obtain a first fill flow rate $FR_{fp}$ and a second fill flow rate $FR_{fp}$). At step 304, the system management method 300 may include (e.g., the processor may be configured to) generating a notification, to a user and/or a service/maintenance provider, that the steam generation system needs servicing (e.g., maintenance, descaling, etc.). For example, the fill pump specifically needs to be replaced because of a loss of efficiency. The system management method 300 may include (e.g., the processor may be configured to), at step 306, determining a difference (e.g., lower or higher) in drainage flow rate $FR_{dp}$ beyond the threshold (e.g., in association with sequentially repeating step 206 to obtain a first drainage flow rate $FR_{dp}$ and a second drainage flow rate $FR_{dp}$). At step 308, the system management method 300 may include (e.g., the processor may be configured to) generating a notification, to a user and/or a service/maintenance provider, that the steam generation system needs servicing (e.g., maintenance, descaling, etc.). For example, the drainage pump specifically needs to be replaced because of a loss of efficiency. The system management method 300 may (e.g., the processor may be configured to), at step 310, determine a difference (e.g., lower or higher) in steam flow rate $FR_{boiler}$ beyond the threshold (e.g., in association with sequentially repeating step 210 to obtain a first steam flow rate $FR_{boiler}$ and a second steam flow rate $FR_{boiler}$). At step 312, the system management method 300 may (e.g., the processor may be configured to) generate a notification, to a user and/or a service/maintenance provider, that the steam generation system needs servicing (e.g., maintenance, descaling, etc.). For example, the steam generator specifically needs to be replaced because of a loss of efficiency.

The invention disclosed herein is further summarized in the following paragraphs and is further characterized by combinations of any and all of the various aspects described therein.

According to one aspect of the present disclosure, a method of estimating fluid in a steam generation system includes determining a first steam flow rate of a steam generator. During a present steam cycle, determine a quantity of liquid remaining in the one or more liquid reservoirs by determining a time the steam generator injected steam and multiplying the time by the first steam flow rate. Based on the first steam flow rate, determine a time remaining before the quantity of liquid remaining in the one or more liquid reservoirs is below a threshold and the one or more liquid reservoirs needs to be refilled.

According to another aspect, a method includes, before a present steam cycle, determining a starting quantity of liquid in one or more liquid reservoirs.

According to another aspect, a method includes obtaining a usage requirement by multiplying a first steam flow rate by at least one of a remaining steam cycle requirement of a present steam cycle or a subsequent steam cycle requirement of a subsequent steam cycle. Comparing a usage requirement with a quantity of liquid remaining in one or more liquid reservoirs.

According to still another aspect, a method includes, after a present steam cycle, determining a second steam flow rate of a steam generator.

According to another aspect, a first steam flow rate is different than a second steam flow rate.

According to yet another aspect, a method includes, during a subsequent steam cycle, determining a time remaining before a quantity of liquid remaining in one or more liquid reservoirs is below a threshold and the one or more liquid reservoirs needs to be refilled based on a second steam flow rate.

According to still another aspect, a method includes comparing a first steam flow rate to a second steam flow rate and upon a determination that the second steam flow rate is different (e.g., lower or higher) than the first steam flow rate by a threshold amount, generating a notification.

According to another aspect, the notification specifically addresses a steam generator efficiency.

According to yet another aspect, the one or more fluid reservoirs includes at least two fluid reservoirs.

According to still another aspect, a method includes filling a steam generator with a quantity of liquid past a minimum level obtained by a first sensor to a maximum level obtained by a second sensor. Running the steam generator at a first steam flow rate until a quantity of liquid in the steam generator returns to the minimum level. Dividing a volume between the minimum level and the maximum level by a time the steam generator was running.

According to another aspect of the present disclosure, a method of estimating fluid in a steam generation system includes determining a first steam flow rate of a steam generator for a present steam cycle. After the present steam cycle, fill the steam generator with a quantity of liquid past a minimum level obtained by a first sensor to a maximum level obtained by a second sensor. Run the steam generator until the quantity of liquid in the steam generator returns to the minimum level. Divide a volume between the minimum level and the maximum level by the time the steam generator was running to determine a second steam flow rate.

According to still another aspect, a method includes, before a subsequent steam cycle, obtaining a starting quantity of liquid in one or more liquid reservoirs. During the subsequent steam cycle, determining a quantity of liquid remaining in one or more liquid reservoirs by determining a time a steam generator injected steam and multiplying the time by a second steam flow rate.

According to yet another aspect, a method includes, based on a second steam flow rate, determining a time remaining before a quantity of liquid remaining in one or more liquid reservoirs is below a threshold and one or more liquid reservoirs needs to be refilled.

According to still another aspect, a method includes, after the subsequent steam cycle, generating a notification if an additionally requested steam cycle will not be completed prior to when one or more liquid reservoirs need to be refilled.

According to yet another aspect, a first steam flow rate is different than a second steam flow rate.

According to another aspect, a method of estimating fluid in a steam generation system includes, before a first steam cycle, determining a first drainage flow rate of a drainage pump by measuring a time to reduce a liquid level in a steam generator from a maximum level to a minimum level with input only from the drainage pump. After the first steam cycle, actuate the drainage pump until the liquid level in the steam generator is equal to the minimum level.

According to yet another aspect, a method includes continuing to actuate the drainage pump for a period of time until the liquid level is empty wherein substantially all of the liquid in the steam generation system is located in one or more liquid reservoirs based on the first drainage flow rate.

According to yet another aspect, a method includes, after a first steam cycle but before a second steam cycle, determining a second drainage flow rate of a drainage pump by measuring a second time to reduce a liquid level in a steam generator from a maximum level to a minimum level with input only from the drainage pump. After a second steam cycle, actuating the drainage pump until the liquid level in the steam generator is equal to the minimum level.

According to yet another aspect, a method includes continuing to actuate the drainage pump for a second period of time until the liquid level is empty based on the second drainage flow rate and where the first drainage flow rate is different than a second drainage flow rate.

According to still another aspect, a method includes comparing a first drainage flow rate and a second drainage flow rate. Upon a determination that the second drainage flow rate is different (e.g., lower or higher) than the first drainage flow rate by a threshold amount, generating a notification.

According to yet another aspect, the notification specifically addresses a drainage pump efficiency.

According to still another aspect, a method incudes, with a fill pump, filling a liquid level in a steam generator to a maximum level, turning the fill pump off, and, with a drainage pump, reducing the liquid level in the steam generator to a minimum level.

According to yet another aspect, a method includes determining a fill flow rate of a fill pump by determining a time to fill a steam generator between a minimum level and a maximum level and dividing the time by a volume between the minimum level and the maximum level. Starting at empty, filling the steam generator for a period of time to reach the minimum level with input only from the fill pump and multiplying the period of time by the fill flow rate to obtain a volume between the minimum level and empty.

According to yet another aspect, a method includes, before the first steam cycle, determining a first fill flow rate of the fill pump by determining a time to fill the steam generator between the minimum level and the maximum level and dividing the time by a volume between the minimum level and the maximum level. Before a second steam cycle, determining a second fill flow rate of the fill pump by determining a time to fill the steam generator between the minimum level and the maximum level and dividing the time by a volume between the minimum level and the maximum level. The method further includes comparing the first fill flow rate and the second fill flow rate and upon a determination that the second fill flow rate is different than the first fill flow rate by a threshold amount, generating a notification.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited as described by the appended claims. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

**Claims**

1. A method (200) of controlling a steam generation system (10), in particular a steam generation system (10) of a cooking appliance, the steam generation system (10) including one or more liquid reservoirs (12), a steam generator (14) and a steam output (28), the one or more liquid reservoirs (12) being fluidically connected to the steam generator (14), the steam generator (14) being configured for converting liquid from the one or more liquid reservoirs (12) into steam in particular during a steam cycle, a steam line (26) extending from the steam generator (14) to the steam output (28), **characterized in that** the
method (200) comprises the steps of:

   during a present steam cycle, determining an injection time in which steam is injected by the steam generator (14) and/or by the steam output (28);
   multiplying the injection time by a predetermined steam flow rate of the steam generator (14);

based on the predetermined steam flow rate of the steam generator (14) and on the injection time, determining a quantity of liquid remaining in the one or more liquid reservoirs (12); and

based on the predetermined steam flow rate of the steam generator (14) and on the quantity of liquid remaining in the one or more liquid reservoirs (12), determining a remaining time.

2. The method (200) of claim 1, wherein the remaining time corresponds to how much time is remaining before the quantity of liquid remaining in the one or more liquid reservoirs (12) is below a threshold and/or before the one or more liquid reservoirs (12) need to be refilled.

3. The method (200) of claim 1 or claim 2, further comprising the steps of:

obtaining a usage requirement by multiplying the predetermined steam flow rate by at least one of a remaining steam cycle requirement of the present steam cycle or a subsequent steam cycle requirement of a subsequent steam cycle; and

comparing the usage requirement with the quantity of liquid remaining in the one or more liquid reservoirs (12).

4. The method (200) of any one of the previous claims, further comprising, after the present steam cycle, the step of determining an updated steam flow rate of the steam generator (14).

5. The method (200) of claim 4, wherein the updated steam flow rate of the steam generator (14) is determined periodically and/or after a predetermined number of steam cycles, in particular wherein the updated steam flow rate of the steam generator (14) can be determined during each steam cycle or after more than one steam cycle.

6. The method (200) of claim 4 or claim 5, further comprising, during a subsequent steam cycle, the step of determining, based on the updated steam flow rate of the steam generator (14), an updated remaining time.

7. The method (200) of any one of claims 4 to 6, further comprising the steps of:

comparing the predetermined steam flow rate of the steam generator (14) to the updated steam flow rate of the steam generator (14); and

upon a determination that the updated steam flow rate of the steam generator (14) is different than the predetermined steam flow rate of the steam generator (14) by a threshold amount, generating, in particular by means of an alarm (34) operationally connected to the steam generation system (10), a notification addressing an efficiency of the steam generator (14), in particular a notification informing that the steam generator (14) requires maintenance or descaling or replacement.

8. The method (200) of any one of the previous claims, further comprising the steps of:

filling the steam generator (14) with a quantity of liquid past a minimum level obtained by a first sensor to a maximum level obtained by a second sensor; and

running the steam generator (14) at the steam flow rate of the steam generator (14) until the quantity of liquid in the steam generator returns to the minimum level; wherein the predetermined steam flow rate is determined by dividing a volume between the minimum level and the maximum level by the time the steam generator (14) was running.

9. The method (200) of any one of the previous claims, the steam generation system (10) further including a fill pump (20) and a drainage pump (24), the one or more liquid reservoirs (12) being fluidically connected to the steam generator (14) via a first liquid line (16) and via a second liquid line (22), the fill pump (20) being located along the first liquid line (16) and being configured for controlling liquid exiting the one or more liquid reservoirs (12) and entering the steam generator (14), the drainage pump (24) being located along the second liquid line (22) and being configured for controlling liquid exiting the steam generator (14) and entering the one or more liquid reservoirs (12), wherein the fill pump (20) and the drainage pump (24) can be connected to a single fluid line and/or can be integrated in a single component such as a reversible pump, the method (200) further comprising, before a steam cycle, the step of determining a drainage flow rate of the drainage pump (24) by measuring a time to reduce a liquid level in a steam generator (14) from a maximum level to a minimum level in particular with input only from the drainage pump (24) and/or in particular by keeping the fill pump (20) and a boiler of the steam generation system (10) both kept switched off.

**10.** The method (200) of claim 9, further comprising, after the steam cycle, the steps of:

actuating the drainage pump (24) until the liquid level in the steam generator (14) is equal to the minimum level and continuing to actuate the drainage pump (24) for a period of time until the steam generator (14) is empty so that substantially all of the liquid in the steam generation system (10) is located in the one or more liquid reservoirs (12), in particular wherein the period of time is determined based on a flow rate of the drainage pump (24).

**11.** The method (200) of any one of the previous claims, the steam generation system (10) further including at least a first fluid level sensor (30) associated with a minimum level of liquid in the steam generator (14) and a second fluid level sensor (32) associated with a maximum level of liquid in the steam generator (14), wherein the quantity of liquid remaining in the one or more liquid reservoirs (12) is also determined based on detections of the first fluid level sensor (30) and of the second fluid level sensor (32).

**12.** The method (200) of any one of claims 1 to 11, further comprising, if the one or more liquid reservoirs (12) need to be refilled and/or if an additionally requested steam cycle will not be completed without any refilling of the one or more liquid reservoirs (12), the step of generating, in particular by means of an alarm (34) operationally connected to the steam generation system (10), a warning requesting a manual refill of the one or more liquid reservoirs (12) or an approval to begin an auto-refill process of the one or more liquid reservoirs (12).

**13.** The method (200) of any one of claims 1 to 11, further comprising at least one of:

if the one or more liquid reservoirs (12) need to be refilled and/or if an additionally requested steam cycle will not be completed without any refilling of the one or more liquid reservoirs (12), the step of automatically beginning an auto-refill process of the one or more liquid reservoirs (12);
before the present steam cycle, the step of determining a starting quantity of liquid in the one or more liquid reservoirs (12).

**14.** The method (200) of any one of the previous claims, the steam generator (14) including a boiler configured to operate according to a predetermined duty cycle, wherein the remaining time is determined by dividing the quantity of liquid remaining in the one or more liquid reservoirs (12) by the predetermined steam flow rate of the steam generator (14) multiplied by the duty cycle of the boiler.

**15.** A steam generation system (10) of a cooking appliance, including one or more liquid reservoirs (12), a steam generator (14) and a steam output (28), the one or more liquid reservoirs (12) being fluidically connected to the steam generator (14), the steam generator (14) being configured for converting liquid from the one or more liquid reservoirs (12) into steam in particular during a steam cycle, a steam line (26) extending from the steam generator (14) to the steam output (28), **characterized in that**
the steam generation system (10) further includes a control system (100) configured to perform the following method steps according to any one of claims 1-14:

during a present steam cycle, determining an injection time in which steam is injected by the steam generator (14) and/or by the steam output (28);
multiplying the injection time by a predetermined steam flow rate of the steam generator (14);
based on the predetermined steam flow rate of the steam generator (14) and on the injection time, determining a quantity of liquid remaining in the one or more liquid reservoirs (12); and
based on the predetermined steam flow rate of the steam generator (14) and on the quantity of liquid remaining in the one or more liquid reservoirs (12), determining a remaining time.

**Patentansprüche**

**1.** Verfahren (200) zum Steuern eines Dampferzeugungssystems (10), insbesondere eines Dampferzeugungssystems (10) eines Kochgeräts, wobei das Dampferzeugungssystem (10) einen oder mehrere Flüssigkeitsbehälter (12), einen Dampferzeuger (14) und einen Dampfauslass (28) umfasst, wobei der eine oder die mehreren Flüssigkeitsbehälter (12) mit dem Dampferzeuger (14) in Fluidverbindung stehen, wobei der Dampferzeuger (14) dazu ausgelegt ist, eine Flüssigkeit aus dem einen oder den mehreren Flüssigkeitsbehältern (12), insbesondere während eines Dampfzyklus, in Dampf umzuwandeln, wobei sich eine Dampfleitung (26) vom Dampferzeuger (14) zum Dampfauslass (28) erstreckt, **dadurch gekennzeichnet, dass** das Verfahren (200) die folgenden Schritte umfasst:

während eines aktuellen Dampfzyklus Bestimmen einer Einspritzzeit, während welcher Dampf vom Dampferzeuger (14) und/oder vom Dampfauslass (28) eingespritzt wird;

Multiplizieren der Einspritzzeit mit einer festgelegten Dampfströmungsgeschwindigkeit des Dampferzeugers (14);

basierend auf der festgelegten Dampfströmungsgeschwindigkeit des Dampferzeugers (14) und auf der Einspritzzeit Bestimmen der in dem einen oder den mehreren Flüssigkeitsbehältern (12) verbleibenden Flüssigkeitsmenge und

basierend auf der festgelegten Dampfströmungsgeschwindigkeit des Dampferzeugers (14) und auf der in dem einen oder den mehreren Flüssigkeitsbehältern (12) verbleibenden Flüssigkeitsmenge Bestimmen einer Restzeit.

2. Verfahren (200) nach Anspruch 1, wobei die Restzeit der verbleibenden Zeit entspricht, bevor die in dem einen oder den mehreren Flüssigkeitsbehältern (12) verbleibende Flüssigkeitsmenge unter einem Schwellenwert liegt, und/oder bevor der eine oder die mehreren Flüssigkeitsbehälter (12) nachgefüllt werden müssen.

3. Verfahren (200) nach Anspruch 1 oder Anspruch 2, ferner folgende Schritte umfassend:

Erhalten einer Benutzungsanforderung durch Multiplizieren der festgelegten Dampfströmungsgeschwindigkeit mit einer verbleibenden Dampfzyklusanforderung des aktuellen Dampfzyklus und/oder einer nachfolgenden Dampfzyklusanforderung eines nachfolgenden Dampfzyklus; und

Vergleichen der Benutzungsanforderung mit der in dem einen oder den mehreren Flüssigkeitsbehältern (12) verbleibenden Flüssigkeitsmenge.

4. Verfahren (200) nach einem der vorstehenden Ansprüche, ferner umfassend, nach dem aktuellen Dampfzyklus, den Schritt des Bestimmens einer aktualisierten Dampfströmungsgeschwindigkeit des Dampferzeugers (14).

5. Verfahren (200) nach Anspruch 4, wobei die aktualisierte Dampfströmungsgeschwindigkeit des Dampferzeugers (14) periodisch und/oder nach einer festgelegten Anzahl von Dampfzyklen bestimmt wird, insbesondere wobei die aktualisierte Dampfströmungsgeschwindigkeit des Dampferzeugers (14) während jedes Dampfzyklus oder nach mehr als einem Dampfzyklus bestimmt werden kann.

6. Verfahren (200) nach Anspruch 4 oder Anspruch 5, ferner umfassend, während eines nachfolgenden Dampfzyklus, den Schritt des Bestimmens einer aktualisierten Restzeit basierend auf der aktualisierten Dampfströmungsgeschwindigkeit des Dampferzeugers (14).

7. Verfahren (200) nach einem der Ansprüche 4 bis 6, ferner folgende Schritte umfassend:

Vergleichen der festgelegten Dampfströmungsgeschwindigkeit des Dampferzeugers (14) mit der aktualisierten Dampfströmungsgeschwindigkeit des Dampferzeugers (14) und

beim Bestimmen, dass sich die aktualisierte Dampfströmungsgeschwindigkeit des Dampferzeugers (14) von der festgelegten Dampfströmungsgeschwindigkeit des Dampferzeugers (14) um einen Schwellenwert unterscheidet, Erzeugen, insbesondere mittels eines Alarms (34), der mit dem Dampferzeugungssystem (10) wirkverbunden ist, einer Meldung, welche die Effizienz des Dampferzeugers (14) angibt, insbesondere einer Meldung, die darüber informiert, dass der Dampferzeuger (14) gewartet, entkalkt oder ausgetauscht werden muss.

8. Verfahren (200) nach einem der vorstehenden Ansprüche, ferner folgende Schritte umfassend:

Füllen des Dampferzeugers (14) mit einer Flüssigkeitsmenge über einen Mindestfüllstand, der durch einen ersten Sensor erhalten wird, zu einem Höchstfüllstand, der durch einen zweiten Sensor erhalten wird; und

Betreiben des Dampferzeugers (14) mit der Dampfströmungsgeschwindigkeit des Dampferzeugers (14), bis die Flüssigkeitsmenge im Dampferzeuger wieder auf dem Mindestfüllstand ist;

wobei die festgelegte Dampfströmungsgeschwindigkeit durch Teilen eines Volumens zwischen dem Mindestfüllstand und dem Höchstfüllstand durch die Zeit, die der Dampferzeuger (14) läuft, bestimmt wird.

9. Verfahren (200) nach einem der vorstehenden Ansprüche, wobei das Dampferzeugungssystem (10) ferner eine Füllpumpe (20) und eine Entleerungspumpe (24) umfasst, wobei der eine oder die mehreren Flüssigkeitsbehälter (12) über eine erste Flüssigkeitsleitung (16) und über eine zweite Flüssigkeitsleitung (22) mit dem Dampferzeuger (14) in Fluidverbindung steht, wobei sich die Füllpumpe (20) entlang der ersten Flüssigkeitsleitung (16) befindet und dazu ausgelegt ist, die aus dem einen oder den mehreren Flüssigkeitsbehältern (12) austretende und in den Dampferzeuger (14) eintretende Flüssigkeit zu steuern, wobei sich die Entleerungspumpe (24) entlang der zweiten Flüssigkeitsleitung (22) befindet und dazu ausgelegt ist, die aus dem Dampferzeuger (14) austretende und in den einen oder die mehreren Flüssigkeitsbehälter (12) eintretende Flüssigkeit zu steuern, wobei die Füllpumpe (20) und die Entleerungspumpe (24) mit einer einzelnen Fluidleitung verbunden sein können und/oder in eine einzelne Komponente integriert sein können, zum Beispiel eine Umkehrpumpe, wobei das Verfahren (200) ferner vor einem Dampfzyklus den Schritt des Bestimmens der Entleerungsströmungsgeschwindigkeit der Entleerungspumpe (24) umfasst, indem die Zeit gemessen wird, die es dauert, um den Flüssigkeitsfüllstand im Dampferzeuger (14) von einem Höchstfüllstand auf einen Mindestfüllstand zu reduzieren, insbesondere lediglich mit einer Zuführung von der Entleerungspumpe (24) und/oder insbesondere bei ausgeschalteter Füllpumpe (20) und ausgeschaltetem Boiler des Dampferzeugungssystems (10).

10. Verfahren (200) nach Anspruch 9, ferner nach dem Dampfzyklus folgende Schritte umfassend:

Betätigen der Entleerungspumpe (24), bis der Flüssigkeitsfüllstand im Dampferzeuger (14) gleich dem Mindestfüllstand ist, und
weiterhin Betätigen der Entleerungspumpe (24) für einen Zeitraum, bis der Dampferzeuger (14) leer ist, sodass sich im Wesentlichen die gesamte Flüssigkeit im Dampferzeugungssystem (10) in dem einen oder den mehreren Flüssigkeitsbehältern (12) befindet, insbesondere wobei der Zeitraum basierend auf der Strömungsgeschwindigkeit der Entleerungspumpe (24) bestimmt wird.

11. Verfahren (200) nach einem der vorstehenden Ansprüche, wobei das Dampferzeugungssystem (10) ferner mindestens einen ersten Fluidfüllstandssensor (30), der dem Mindestfüllstand der Flüssigkeit im Dampferzeuger (14) zugeordnet ist, und einen zweiten Fluidfüllstandssensor (32), der dem Höchstfüllstand der Flüssigkeit im Dampferzeuger (14) zugeordnet ist, umfasst, wobei die in dem einen oder den mehreren Flüssigkeitsbehältern (12) verbleibende Flüssigkeitsmenge ebenfalls basierend auf den Messungen des ersten Fluidfüllstandssensors (30) und des zweiten Fluidfüllstandssensors (32) bestimmt wird.

12. Verfahren (200) nach einem der Ansprüche 1 bis 11, ferner umfassend, falls der eine oder die mehreren Flüssigkeitsbehälter (12) nachgefüllt werden müssen, und/oder falls ein zusätzlich angeforderter Dampfzyklus nicht ohne Nachfüllen des einen oder der mehreren Flüssigkeitsbehälter (12) abgeschlossen werden kann, den Schritt des Erzeugens, insbesondere mittels eines Alarms (34), der mit dem Dampferzeugungssystem (10) wirkverbunden ist, einer Warnung, die ein manuelles Nachfüllen des einen oder der mehreren Flüssigkeitsbehälter (12) oder die Genehmigung des Startens eines automatischen Nachfüllvorgangs des einen oder der mehreren Flüssigkeitsbehälter (12) anfordert.

13. Verfahren (200) nach einem der Ansprüche 1 bis 11, ferner mindestens einen der folgenden Schritte umfassend:

falls der eine oder die mehreren Flüssigkeitsbehälter (12) nachgefüllt werden müssen und/oder falls ein zusätzlich angeforderter Dampfzyklus nicht ohne Nachfüllen des einen oder der mehreren Flüssigkeitsbehälter (12) abgeschlossen werden kann, den Schritt des automatischen Startens eines automatischen Nachfüllvorgangs des einen oder der mehreren Flüssigkeitsbehälter (12);
vor dem aktuellen Dampfzyklus den Schritt des Bestimmens der Ausgangsflüssigkeitsmenge in dem einen oder den mehreren Flüssigkeitsbehältern (12).

14. Verfahren (200) nach einem der vorstehenden Ansprüche, wobei der Dampferzeuger (14) einen Boiler umfasst, der dazu ausgelegt ist, entsprechend einem festgelegten Betriebszyklus zu laufen, wobei die Restzeit durch Teilen der in dem einen oder den mehreren Flüssigkeitsbehältern (12) verbleibenden Flüssigkeitsmenge durch die festgelegte Dampfströmungsgeschwindigkeit des Dampferzeugers (14), multipliziert mit dem Betriebszyklus des Boilers bestimmt wird.

15. Dampferzeugungssystem (10) eines Kochgeräts, umfassend einen oder mehrere Flüssigkeitsbehälter (12), einen Dampferzeuger (14) und einen Dampfauslass (28), wobei der eine oder die mehreren Flüssigkeitsbehälter (12) mit dem Dampferzeuger (14) in Fluidverbindung stehen, wobei der Dampferzeuger (14) dazu ausgelegt ist, eine Flüssigkeit aus dem einen oder den mehreren Flüssigkeitsbehältern (12), insbesondere während eines Dampfzyklus, in Dampf umzuwandeln, wobei sich eine Dampfleitung (26) vom Dampferzeuger (14) zum Dampfauslass (28) erstreckt, **dadurch gekennzeichnet, dass** das Dampferzeugungssystem (10) ferner ein Steuersystem (100) umfasst, das dazu ausgelegt ist, die folgenden Verfahrensschritte nach einem der Ansprüche 1-14 auszuführen:

während eines aktuellen Dampfzyklus Bestimmen einer Einspritzzeit, während welcher Dampf vom Dampferzeuger (14) und/oder vom Dampfauslass (28) eingespritzt wird;

Multiplizieren der Einspritzzeit mit einer festgelegten Dampfströmungsgeschwindigkeit des Dampferzeugers (14);

basierend auf der festgelegten Dampfströmungsgeschwindigkeit des Dampferzeugers (14) und auf der Einspritzzeit Bestimmen der in dem einen oder

den mehreren Flüssigkeitsbehältern (12) verbleibenden Flüssigkeitsmenge und

basierend auf der festgelegten Dampfströmungsgeschwindigkeit des Dampferzeugers (14) und auf der in dem einen oder den mehreren Flüssigkeitsbehältern (12) verbleibenden Flüssigkeitsmenge Bestimmen einer Restzeit.

## Revendications

1.  Procédé (200) de commande d'un système de génération de vapeur (10), en particulier d'un système de génération de vapeur (10) d'un appareil de cuisson, le système de génération de vapeur (10) incluant un ou plusieurs réservoirs de liquide (12), un générateur de vapeur (14) et une sortie de vapeur (28), l'un ou les plusieurs réservoirs de liquide (12) étant fluidiquement raccordés au générateur de vapeur (14), le générateur de vapeur (14) étant configuré pour convertir un liquide provenant de l'un ou des plusieurs réservoirs de liquide (12) en vapeur en particulier durant un cycle de vapeur, une conduite de vapeur (26) s'étendant depuis le générateur de vapeur (14) jusqu'à la sortie de vapeur (28), **caractérisé en ce que** le procédé (200) comprend les étapes de :

    durant un cycle de vapeur actuel, la détermination d'un temps d'injection durant lequel de la vapeur est injectée par le générateur de vapeur (14) et/ou par la sortie de vapeur (28) ;
    la multiplication du temps d'injection par un débit de vapeur prédéterminé du générateur de vapeur (14) ;
    sur la base du débit de vapeur prédéterminé du générateur de vapeur (14) et du temps d'injection, la détermination d'une quantité de liquide restant dans l'un ou les plusieurs réservoirs de liquide (12) ; et
    sur la base du débit de vapeur prédéterminé du générateur de vapeur (14) et de la quantité de liquide restant dans l'un ou les plusieurs réservoirs de liquide (12), la détermination d'un temps restant.

2.  Procédé (200) de la revendication 1, dans lequel le temps restant correspond à la durée de temps restant avant que la quantité de liquide restant dans l'un ou les plusieurs réservoirs de liquide (12) soit inférieure à un seuil et/ou avant que l'un ou les plusieurs réservoirs de liquide (12) doivent être remplis à nouveau.

3.  Procédé (200) de la revendication 1 ou la revendication 2, comprenant en outre les étapes de :

    l'obtention d'une nécessité d'usage en multipliant le débit de vapeur prédéterminé par au moins une d'une nécessité de cycle de vapeur restant du cycle de vapeur actuel ou d'une nécessité de cycle de vapeur subséquent d'un cycle de vapeur subséquent ; et
    la comparaison de la nécessité d'usage à la quantité de liquide restant dans l'un ou les plusieurs réservoirs de liquide (12).

4.  Procédé (200) de l'une quelconque des revendications précédentes, comprenant en outre, après le cycle de vapeur actuel, l'étape de la détermination d'un débit de vapeur mis à jour du générateur de vapeur (14).

5.  Procédé (200) de la revendication 4, dans lequel le débit de vapeur mis à jour du générateur de vapeur (14) est déterminé périodiquement et/ou après un nombre prédéterminé de cycles de vapeur, en particulier dans lequel le débit de vapeur mis à jour du générateur de vapeur (14) peut être déterminé durant chaque cycle de vapeur ou après plus d'un cycle de vapeur.

6.  Procédé (200) de la revendication 4 ou la revendication 5, comprenant en outre, durant un cycle de vapeur subséquent, l'étape de la détermination, sur la base du débit de vapeur mis à jour du générateur de vapeur (14), d'un temps restant mis à jour.

7.  Procédé (200) de l'une quelconque des revendications 4 à 6, comprenant en outre les étapes de :

    la comparaison du débit de vapeur prédéterminé du générateur de vapeur (14) au débit de vapeur mis à jour du générateur de vapeur (14) ; et

EP 4 356 793 B1

à la suite d'une détermination que le débit de vapeur mis à jour du générateur de vapeur (14) est différent du débit de vapeur prédéterminé du générateur de vapeur (14) selon une quantité seuil, la génération, en particulier au moyen d'une alarme (34) fonctionnellement connectée au système de génération de vapeur (10), d'une notification concernant un rendement du générateur de vapeur (14), en particulier d'une notification informant que le générateur de vapeur (14) nécessite une maintenance ou un détartrage ou un remplacement.

8. Procédé (200) de l'une quelconque des revendications précédentes, comprenant en outre les étapes de :

le remplissage du générateur de vapeur (14) avec une quantité de liquide au-delà d'un niveau minimum obtenu par un premier capteur jusqu'à un niveau maximum obtenu par un second capteur ; et
la mise en fonctionnement du générateur de vapeur (14) au débit de vapeur du générateur de vapeur (14) jusqu'à ce que la quantité de liquide dans le générateur de vapeur retourne au niveau minimum ;
dans lequel le débit de vapeur prédéterminé est déterminé en divisant un volume entre le niveau minimum et le niveau maximum par le temps durant lequel le générateur de vapeur (14) a été mis en fonctionnement.

9. Procédé (200) de l'une quelconque des revendications précédentes, le système de génération de vapeur (10) incluant en outre une pompe de remplissage (20) et d'une pompe de vidange (24), l'un ou les plusieurs réservoirs de liquide (12) étant fluidiquement raccordés au générateur de vapeur (14) par l'intermédiaire d'une première conduite de liquide (16) et par l'intermédiaire d'une seconde conduite de liquide (22), la pompe de remplissage (20) étant située le long de la première conduite de liquide (16) et étant configurée pour commander le liquide sortant de l'un ou des plusieurs réservoirs de liquide (12) et entrant dans le générateur de vapeur (14), la pompe de vidange (24) étant située le long de la seconde conduite de liquide (22) et étant configurée pour commander le liquide sortant du générateur de vapeur (14) et entrant dans l'un ou les plusieurs réservoirs de liquide (12), dans lequel la pompe de remplissage (20) et la pompe de vidange (24) peuvent être raccordées à une seule conduite de liquide et/ou peuvent être intégrées en un seul composant tel qu'une pompe réversible, le procédé (200) comprenant en outre, avant un cycle de vapeur, l'étape de la détermination d'un débit de vidange de la pompe de vidange (24) en mesurant un temps pour réduire un niveau de liquide dans un générateur de vapeur (14) depuis un niveau maximum jusqu'à un niveau minimum en particulier avec une entrée provenant seulement de la pompe de vidange (24) et/ou en particulier en maintenant la pompe de remplissage (20) et une chaudière du système de génération de vapeur (10) toutes les deux éteintes.

10. Procédé (200) de la revendication 9, comprenant en outre, après le cycle de vapeur, les étapes de :

l'actionnement de la pompe de vidange (24) jusqu'à ce que le niveau de liquide dans le générateur de vapeur (14) soit égal au niveau minimum, et
la continuation de l'actionnement de la pompe de vidange (24) pendant un laps de temps jusqu'à ce que le générateur de vapeur (14) soit vide de telle sorte que sensiblement la totalité du liquide dans le système de génération de vapeur (10) est située dans l'un ou les plusieurs réservoirs de liquide (12), en particulier dans lequel le laps de temps est déterminé sur la base d'un débit de la pompe de vidange (24).

11. Procédé (200) de l'une quelconque des revendications précédentes, le système de génération de vapeur (10) incluant en outre au moins un premier capteur de niveau de fluide (30) associé à un niveau minimum de liquide dans le générateur de vapeur (14) et un second capteur de niveau de fluide (32) associé à un niveau maximum de liquide dans le générateur de vapeur (14), dans lequel la quantité de liquide restant dans l'un ou les plusieurs réservoirs de liquide (12) est également déterminée sur la base de détections du premier capteur de niveau de fluide (30) et du second capteur de niveau de fluide (32).

12. Procédé (200) de l'une quelconque des revendications 1 à 11, comprenant en outre, si l'un ou les plusieurs réservoirs de liquide (12) doivent être remplis à nouveau et/ou si un cycle de vapeur demandé en plus ne sera pas achevé sans aucun remplissage à nouveau de l'un ou des plusieurs réservoirs de liquide (12), l'étape de la génération, en particulier au moyen d'une alarme (34) fonctionnellement connectée au système de génération de vapeur (10), d'un avertissement demandant un remplissage à nouveau manuel de l'un ou des plusieurs réservoirs de liquide (12) ou une approbation de commencer un processus de remplissage à nouveau automatique de l'un ou des plusieurs réservoirs de liquide (12).

13. Procédé (200) de l'une quelconque des revendications 1 à 11, comprenant en outre au moins une de :

si l'un ou les plusieurs réservoirs de liquide (12) doivent être remplis à nouveau et/ou si un cycle de vapeur demandé en plus ne sera pas achevé sans aucun remplissage à nouveau de l'un ou des plusieurs réservoirs de

**14**

liquide (12), l'étape du commencement automatique d'un processus de remplissage à nouveau automatique de l'un ou des plusieurs réservoirs de liquide (12) ;

avant le cycle de vapeur actuel, l'étape de la détermination d'une quantité de liquide de départ dans l'un ou les plusieurs réservoirs de liquide (12).

14. Procédé (200) de l'une quelconque des revendications précédentes, le générateur de vapeur (14) incluant une chaudière configurée pour fonctionner selon un cycle d'utilisation prédéterminé, dans lequel le temps restant est déterminé en divisant la quantité de liquide restant dans l'un ou les plusieurs réservoirs de liquide (12) par le débit de vapeur prédéterminé du générateur de vapeur (14) multiplié par le cycle d'utilisation de la chaudière.

15. Système de génération de vapeur (10) d'un appareil de cuisson, incluant un ou plusieurs réservoirs de liquide (12), un générateur de vapeur (14) et une sortie de vapeur (28), l'un ou les plusieurs réservoirs de liquide (12) étant fluidiquement raccordés au générateur de vapeur (14), le générateur de vapeur (14) étant configuré pour convertir un liquide provenant de l'un ou des plusieurs réservoirs de liquide (12) en vapeur en particulier durant un cycle de vapeur, une conduite de vapeur (26) s'étendant depuis le générateur de vapeur (14) jusqu'à la sortie de vapeur (28), **caractérisé en ce que** le système de génération de vapeur (10) inclut en outre un système de commande (100) configuré pour réaliser les étapes de procédé suivantes selon l'une quelconque des revendications 1 à 14 :

durant un cycle de vapeur actuel, la détermination d'un temps d'injection durant lequel de la vapeur est injectée par le générateur de vapeur (14) et/ou par la sortie de vapeur (28) ;

la multiplication du temps d'injection par un débit de vapeur prédéterminé du générateur de vapeur (14) ;

sur la base du débit de vapeur prédéterminé du générateur de vapeur (14) et du temps d'injection, la détermination d'une quantité de liquide restant dans l'un ou les plusieurs réservoirs de liquide (12) ; et

sur la base du débit de vapeur prédéterminé du générateur de vapeur (14) et de la quantité de liquide restant dans l'un ou les plusieurs réservoirs de liquide (12), la détermination d'un temps restant.

FIG. 1

**FIG. 2A**

**FIG. 2B**

**FIG. 3**

EP 4 356 793 B1

```
┌─────────────────────┐        ┌─────────────────────┐      ┌─────────────────────┐
│   ADDING FLUID UNTIL │  202   │   MEASURING STEAM   │ 210  │ DETERMINING LIQUID  │ 212
│ SENSOR DETERMINES    │        │ FLOW RATE FR_BOILER │      │ LEVEL IN LIQUID     │
│ LIQUID LEVEL IS AT   │        │ OF STEAM GENERATOR. │      │ RESERVOIR.          │
│ MIN.                 │        │                     │      │                     │
└─────────────────────┘        └─────────────────────┘      └─────────────────────┘
```

ADDING FLUID UNTIL SENSOR DETERMINES LIQUID LEVEL IS AT MIN. — 202

MEASURING STEAM FLOW RATE $FR_{BOILER}$ OF STEAM GENERATOR. — 210

DETERMINING LIQUID LEVEL IN LIQUID RESERVOIR. — 212

200

CONTINUING TO ADD FLUID UNTIL SENSOR DETERMINES LIQUID LEVEL IS AT MAX. — 204

REFILLING LIQUID IN STEAM GENERATOR UNTIL SENSOR DETERMINES LIQUID LEVEL IS AGAIN AT MAX. — 208

DETERMINING HOW MUCH TIME IS REMAINING BEFORE REFILL REQUIREMENT. — 214

DETERMINING VOLUME OF STEAM GENERATOR BETWEEN EMPTY OR 0 LEVEL AND MIN. — 205

DETERMINING HOW LONG IT TAKES LIQUID LEVEL IN STEAM GENERATOR TO REDUCE FROM MAX TO MIN. — 206

EMPTYING STEAM GENERATOR. — 220

GENERATE NOTIFICATION TO USER AND/OR ACTUATING AN AUTO-REFILL PROCESS. — 216

GENERATING WARNING BEFORE DUTY CYCLE IS COMPLETE. — 218

**FIG. 4**

19

EP 4 356 793 B1

```
                                                              302                    300
        ┌──────────────────────────────────────────────┐
        │  DETERMINE DECREASE IN FILL FLOW RATE          │
        │        FR_FP BEYOND THRESHOLD.                  │
        │  ┌──────────────────────────────────────────┐ │
        │  │ GENERATING NOTIFICATION THAT STEAM        │ │
        │  │ GENERATION SYSTEM NEEDS SERVICING.        │ │
        │  └──────────────────────────────────────────┘ │        304
        └──────────────────────────────────────────────┘
                              │
                              ▼
                                                              306
        ┌──────────────────────────────────────────────┐
        │  DETERMINE DECREASE DRAINAGE FLOW RATE         │
        │        FR_DP BEYOND THRESHOLD.                 │
        │  ┌──────────────────────────────────────────┐ │
        │  │ GENERATING NOTIFICATION THAT STEAM        │ │
        │  │ GENERATION SYSTEM NEEDS SERVICING.        │ │
        │  └──────────────────────────────────────────┘ │        308
        └──────────────────────────────────────────────┘
                              │
                              ▼
                                                              310
        ┌──────────────────────────────────────────────┐
        │  DETERMINE DECREASE IN STEAM FLOW RATE         │
        │        FR_BOILER BEYOND THRESHOLD.             │
        │  ┌──────────────────────────────────────────┐ │
        │  │ GENERATING NOTIFICATION THAT STEAM        │ │
        │  │ GENERATION SYSTEM NEEDS SERVICING.        │ │
        │  └──────────────────────────────────────────┘ │        312
        └──────────────────────────────────────────────┘
```

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1019655 B1